# EUROPEAN PATENT SPECIFICATION

(11) **EP 2 241 466 B1**
(45) Date of publication and mention of the grant of the patent: **08.06.2011**
(21) Application number: 09305332.0
(22) Date of filing: 17.04.2009
(51) Int. Cl.: B60J 7/16, B60J 7/20

(54) **A convertible vehicle**
Klappfahrzeug
Véhicule convertible

(43) Date of publication of application: 20.10.2010
(73) Proprietor: Renault s.a.s., 92100 Boulogne-Billancourt (FR)
(72) Inventor: Vasseur, Patrice, 75007, PARIS (FR)

(56) References cited:
- EP-A- 0 277 295
- DE-A1- 10 116 710
- DE-A1-102006 021 227
- DE-U1-202008 001 247
- FR-A- 2 916 726
- US-A1- 2004 222 658

## Description

### FIELD OF THE INVENTION

The present invention relates to vehicle roof systems and in particular to a convertible vehicle having a system in which a vehicle roof can rotate substantially 180° between a closed position covering a passenger compartment and an open position in which it is stored up-side down behind the passenger compartment on top of the trunk lid.

Document FR 2 916 726 discloses a vehicle according to the preamble of claim 1.

### BACKGROUND TO THE INVENTION

An early proposal for a roof system of this general type was disclosed by *PATTEE* in US 4,950,022. The roof pivots 180° from a position overlying the passenger compartment to a storage position resting up side down on top of the rear deck/trunk lid. *PATTEE* himself states that, because the trunk lid is assumed to be hinged conventionally at its front end, it is not possible to access the luggage space without first tilting the inverted roof back upwards. It therefore requires two separate operations to access the luggage space.

A solution to this problem was first proposed by *Dmitri CHEVTSOV* in his "*Giano Design*™" Targa proposals. Most notable in this respect is his "Fliptop™" design for converting a BMW "Z1" sports car, details of which were published by the FISPE (Federal Institute for State Patent Expertise), Moscow, USSR. Publication took place in the FISPE Design Review entitled "*Soviet Design in International Contesf*", page 2, September 1989.

The *CHEVTSOV* designed "Fliptop™" uses a common axis between the 180° rotating hardtop roof panel and the rear trunk lid, which allows access to the trunk space regardless of the position of the hard top and all in one movement. The same solution to trunk access was later also used by *FIORAVANTI* in EP-0901421 and again in his EP-1234704.

In the 1989 "Fliptop™" design, *CHEVTSOV* includes a recess in the trunk lid apparently in order to lower the profile of the stored roof in side view. The same solution of a recess in the trunk lid is again proposed by *FIORAVANTI* in both EP-0901421 and in his EP-1234704, but he had already proposed the same basic idea even earlier in US 3,823,977.

The storage of an inverted hard top on top of the trunk lid proposed in the above-mentioned examples can offer advantages in weight, simplicity and in preserving luggage storage space inside the trunk covered by that lid. In all of these cases, however, the weather seals on the inverted roof panel will be visible and users are likely to find the general appearance untidy.

When the 1989 "Fliptop™" design from *CHEVTSOV* is in its storage position, in common with both EP-0901421 and EP-1234704, the hard top roof presents a concave recess facing upwards. Apart from exposing sealing strips, this will potentially accumulate rain, snow, leaves or other debris. That will not only be unsightly to users and passers-by, but may potentially cause discomfort and embarrassment to users who inadvertently close the roof without taking suitable precautions beforehand. Furthermore, if the concave recess of the exposed roof has water, snow, leaves or other debris accumulated in it, during forward travel that matter may fly out and cause inconvenience to third parties.

More recently, *CHEVTSOV* has proposed a new version of his "Fliptop™" design in his patent US 7,172,236. In this patent, he suggests an embodiment in which the roof panel is not co-axial with the trunk lid at all and indeed, it is no longer stored on top of the trunk lid. Instead of that, it is stored under the trunk lid in the trunk space itself, the trunk lid being a rear-hinged item for the purpose. A similar arrangement for storage of an earlier pivoting hardtop underneath a trunk lid was proposed by *EYB* in US 4,819,982, assigned to *Dr. Ing. H.c.F. Porsche*. Storing a pivoting roof panel inside the trunk addresses some of the problems outlined above, but takes space away from luggage carrying capacity and thereby negates one of the principle benefits proposed for the earlier *Pattee*, *Chevtsov* and *Fioravanti* systems.

### SUMMARY OF THE INVENTION

It is an object of the present invention to provide an improved convertible roof system for a passenger vehicle. More particularly, it is a further object of the present invention to provide a 180° pivoting convertible roof system that is both tidy in appearance and that does not take up trunk space or hinder trunk space access.

Accordingly, the present invention provides a vehicle comprising a body shell defining a passenger compartment extending between a windscreen at its front and at its rear an upstanding rigid element, said body shell further defining a trunk space extending rearwards of said passenger compartment, said trunk space being provided with a trunk lid that is pivotally mounted near its forward edge to said body shell via a transverse trunk lid axis and configured for closure over the top of said trunk space, the vehicle further comprising a rigid roof panel, said rigid roof panel being pivotally mounted to said body shell along a transverse roof axis extending across said body shell above a waistline of said vehicle in the region of said upstanding rigid element, said rigid roof panel being pivotable between a closed position in which said rigid roof panel extends from said upstanding rigid element towards said windscreen and at least partially covers said passenger compartment, and an open position in which said rigid roof panel is substantially up-side down and overlies said trunk lid, wherein said trunk lid supports an openable cover panel that is configured to substantially cover said rigid roof panel when said rigid roof panel is in its open position, said cover panel having a transverse leading edge that extends at least partially across a rear facing portion of said upstanding rigid element, said roof axis and said trunk axis being non-coaxial and are spaced apart from each other in such a manner that, during opening of said trunk lid with said cover panel in its closed position, said leading edge of said cover panel is configured to follow a path that provides, in both an open and a closed position of said trunk lid, a clearance gap, and preferably substantially the same clearance gap, between said leading edge of said cover panel and at least one of said upstanding rigid element and the pivotal mountings of said roof panel, regardless of whether said rigid roof panel is in its closed position or in its open position.

Thanks to the disassociation of the trunk lid axis and the roof axis, the leading edge of the cover panel is configured to follow an arc that avoids interference with the backlight of the passenger compartment.

Said trunk axis may be positioned above the waistline of said vehicle and forwards of said roof axis. Said trunk axis may be positioned higher up than said roof axis.

Means may also be provided for guiding relative movement between on the one hand the assembly of said trunk lid and said cover panel and on the other hand said roof panel, said guide means being operational during opening or closing of said trunk lid whilst said rigid roof panel is in its open position and overlying said trunk lid, and said guide means being configured to avoid abrasion between said roof panel and said assembly of trunk lid and cover panel during the relative movement that results from the independent positioning of said roof panel axis and said trunk lid axis.

Said guide means comprise at least one sliding block or rotary member supported by said trunk lid or said cover panel and may comprise one or more rollers or wheels. Indeed, said guide means may comprise at least one pair of rotary members that sandwiches said roof panel between the upper surface of said trunk lid and the underside of said cover panel, there being preferably provided at least one such pair of guide means on each side of said assembly of trunk lid and cover panel.

Said rigid roof panel may be concave in longitudinal cross section when overlying said trunk lid, and said trunk lid mounted guide means may be aft of said cover panel mounted guide means.

Said rigid roof panel may be concave in lateral cross section when overlying said trunk lid and said trunk lid guide means may be positioned inboard of said cover panel guide means. Said guide means preferably comprise a pair of rollers, supported one on each side of said trunk lid and presenting an inwardly and downwardly directed roller surface to said roof panel, for example by means of frusto-conical or curved roller surfaces. One or more of said guide means may be resilient, so as to act for example as vibration absorbers.

Said rigid roof panel may be pivotally mounted on a buttress member that is structurally independent of, and spaced inboard of, the lateral bodywork panels of said body shell.

Said rigid roof panel may be connected to its roof axis via at least one swing arm, and preferably one on each side thereof, the or each swing arm being configured to lift said rigid roof panel upwards out of contact with an upper edge of said windscreen and an upper edge of said upstanding rigid element and, on pivoting rearwards substantially 180°, to turn said rigid roof panel up-side down and to position it overlying said trunk lid rearwards of said upstanding rigid element.

Said trunk lid may be pivotally mounted to lateral bodywork of said body shell.

Said cover panel may be hinged to a rear edge of said trunk lid and preferably extends forwards at least partially over the pivotal mounting of either or both of said roof panel and said trunk lid.

Drainage means may be provided across said body shell substantially under the leading edge of said cover panel.

Said upstanding rigid element at the rear side of said passenger compartment may comprise a rear back light, a roll bar assembly or a combination of the two, preferably permanently fixed in position.

### BRIEF DESCRIPTION OF THE DRAWINGS

The present invention will now be described by way of example only and with reference to the accompanying drawings, in which:
Figure 1 is a side view of a vehicle having a convertible roof system, in which a roof panel can pivot in one piece about 180° backwards out of the closed position illustrated, into a open or storage position in which it lies over the top of a trunk lid that is hinged co-axially with the roof panel;
Figure 2 is a side view of the system of Figure 1, with the roof panel in the storage position and with a cover panel open and ready to close down over the top of the roof panel;
Figure 3 is a side view of the system of Figure 2, with the cover panel closed;
Figure 4 is a side view of the system of Figures 1 to 3, illustrating what happens when a user tries to open the trunk lid;
Figure 5 is a side view of a preferred embodiment of the present invention, which is an improvement to the type of structure illustrated in Figures 1 to 4 and which addresses the problem illustrated in Figure 4;
Figure 6 is a side view of the embodiment of Figure 5, in which a cover panel hinged to the rear of the trunk lid has been raised, to give access to a roof panel storage space that is defined in between the cover panel and the upper face of the trunk lid;
Figure 7 is the side view of Figure 6, in which a one-piece roof panel is part-way pivoted backwards out of its closed position (Figures 5 and 6) and towards an eventual open position in which it will overlie the trunk lid;
Figure 8 is the side view of Figure 7, once the roof panel has been pivoted 180° backwards into a storage position lying upside-down and laying over the top of the trunk lid, the cover panel being about to pivot down over the top of the roof panel
Figure 9 is the side view of Figure 8, once the cover panel has pivoted down over the roof panel, in order to hide the roof panel from view;
Figure 10 shows what happens when a user opens the trunk lid for the improved arrangement of Figures 5 to 9;
Figure 11 is a side view of the arrangement of Figures 5 to 10, illustrating the roof panel in both its closed position and in its open position;
Figure 12 is a perspective view in cut-away of the pivot arrangement of the roof panel and trunk lid of Figures 5 to 11;
Figure 13 is a section along the line A-A in Figure 11; and
Figure 14 illustrates a method of determining the relative positioning of the axis of rotation of the roof panel and the boot lid for arrangements based on the present invention, including the preferred embodiment of Figures 5 to 13.

### DETAILED DESCRIPTION OF A PREFERRED EMBODIMENT

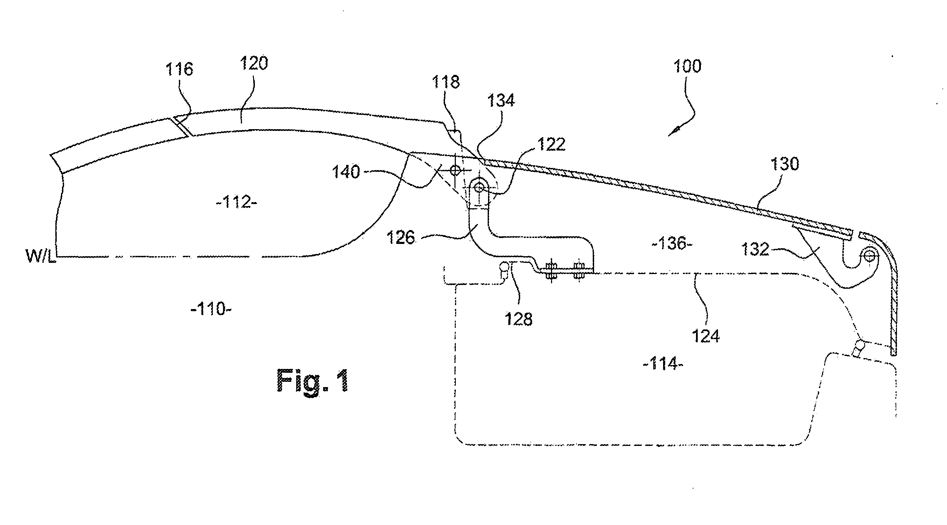

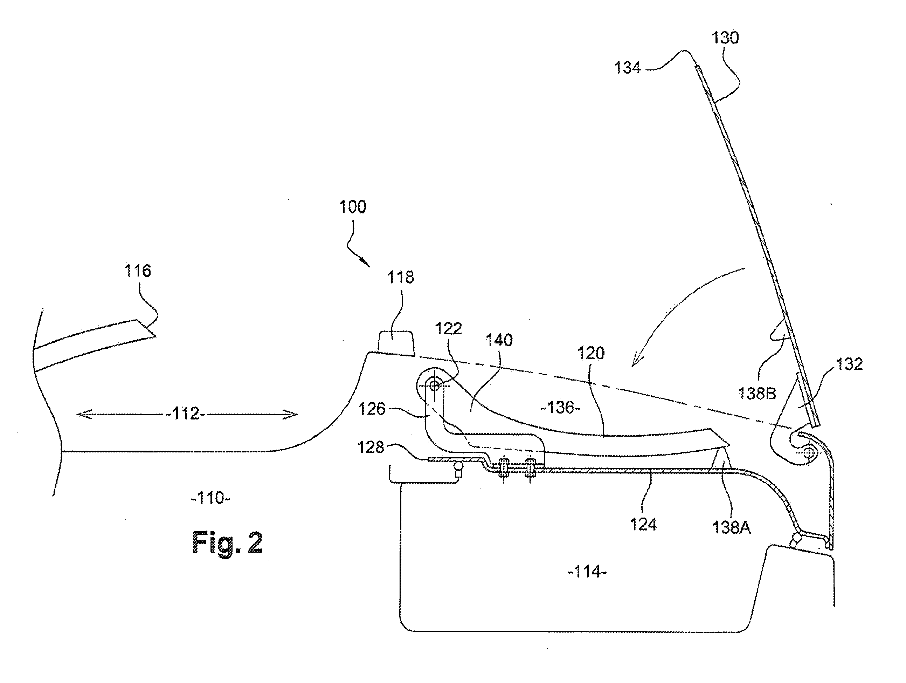

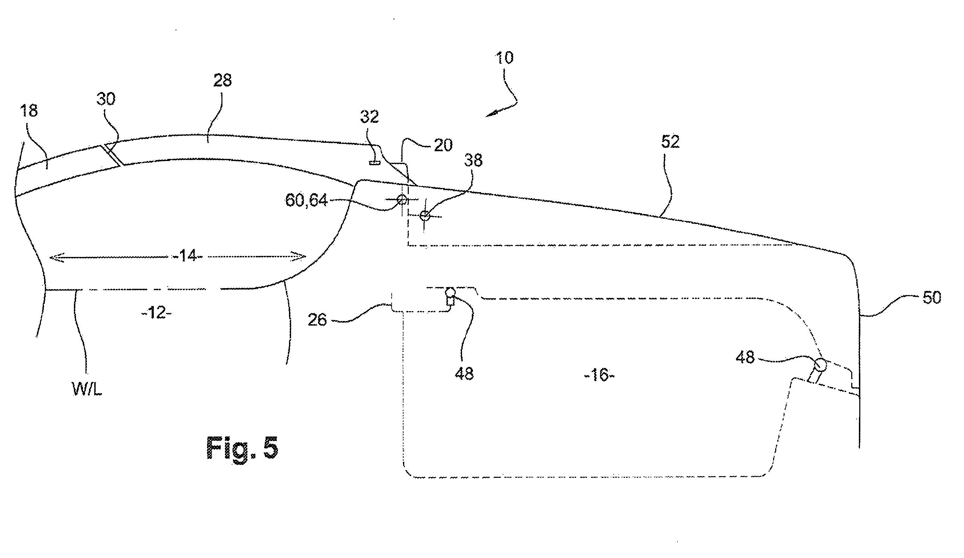

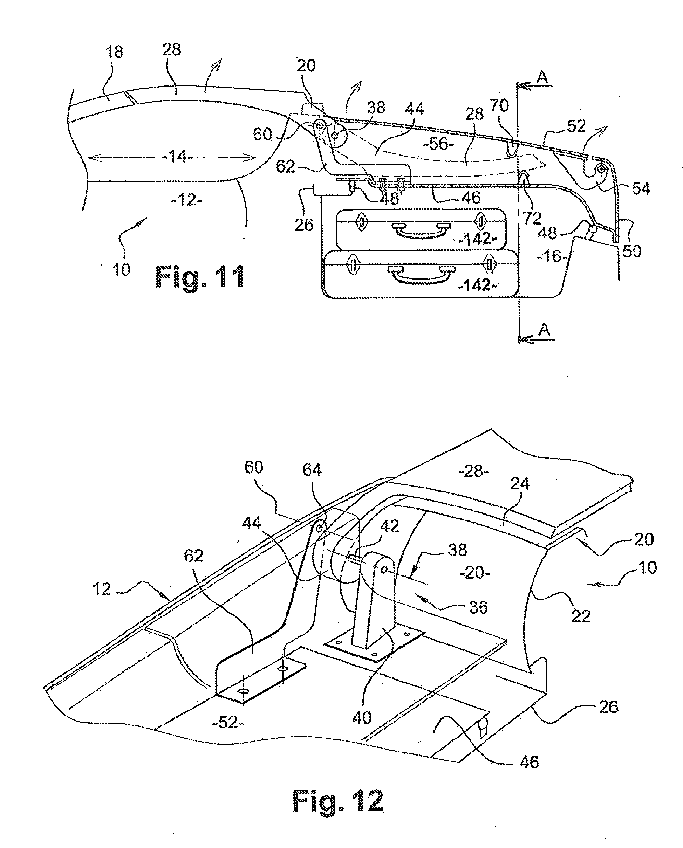

It should be noted that figures 1 to 4 illustrate an initial stage in the development of the present invention, which is completed by the modifications to Figures 1 to 4 that are disclosed in the preferred embodiment illustrated by way of example with reference to Figures 5 to 14.

In the description that follows, relative terms referring to orientation are to be interpreted with respect to the centerline of a vehicle viewed on the flat and facing in its normal direction of travel.

Referring now to the drawings and for the moment in particular to Figures 1 to 4, a vehicle 100 is illustrated which includes a body shell 110 that defines a passenger compartment 112 and a rear trunk space 114.

The passenger compartment 112 extends rearwards from a windshield having a header 116 to a forward facing ledge on the upper side of a backlight 118. The passenger compartment 112 is provided with a roof panel 120, in the form of a single rigid panel 120 that is pivotally connected to the body shell 110 significantly above the waistline W/L of the vehicle 100 by a transverse pivot axis 122 that is located aft of the backlight 118

The trunk space 114 is provided with a trunk lid 124 that is itself provided with hinges 126 towards its front edge 128. These trunk lid hinges 126 may be metal stampings that climb upwards from the trunk lid 124 to pivot the trunk-lid 124 about the same transverse axis 122 as the roof panel 120.

The roof panel 120 can pivot over backwards substantially 180° about the transverse axis 122 in one piece, such that opening it uncovers the passenger compartment 112 and moves the roof panel 120 into a storage position overlying the trunk lid 124.

The trunk-lid 124 is further provided with a styled cover panel 130 that is supported by the trunk lid 124 via a rear-mounted swan-neck hinge assembly 132. The cover panel 130 can be opened by raising its leading edge 134, such that the trunk lid 124 and the cover panel 130 define a storage space 136 between them, which is adapted to receive the roof panel 120 in its open position.

The cover panel 130 can be opened by raising its leading edge 134 upwards to at least the height necessary to allow the roof panel 120 to pivot 180° backwards around the transverse axis 122 and to come to rest upside-down behind and below that axis 122 and thereby over-laying the top of the trunk lid 124 upside down. The cover panel 130 can then be pivoted back down to cover-over the inverted roof panel 120, to protect it from the elements and to hide it from view of the user or passers-by.

The roof panel 120 is stowed in the roof panel storage space 136 that is defined between the trunk lid 124 and the cover panel 130 and it is supported by support means rising from the former 124 and depending from the latter 130. These support means may advantageously be made resilient or otherwise vibration absorbing, for example by being made in rubber or spring-loaded. As illustrated, they may be embodied in the form of a pair of blocks 138A, 138B, divided as illustrated between the cover panel 130 and trunk-lid 124, e.g. forming a sandwich over the open roof panel 120, a pair of blocks 138A,B being provided on each side of the vehicle 100.

Due to the curved nature of the exemplary roof panel 120, the support blocks 138A on the trunk lid 124 are preferably positioned rearwards of the support blocks 138B on the cover panel 130. The general idea is that slight compression of one or both of the support blocks 136A, 136B holds the roof panel 120 in place, for example against vibration.

Among the objectives of the cover panel 130 is to hide the roof panel 120 from view and to protect it from the elements. The cover panel 130 therefore performs the dual role of protecting the roof panel from falling debris or the weather and of improving the aesthetics of the vehicle 100 by hiding the exposed sealing surfaces of the roof panel 120 and also the pivot mechanism 122.

The cover panel 130 can therefore be quite freely styled and may also be configured to smooth out the aerodynamics of the after portion of the vehicle 100. It also mounts part of the support means 138A,B for the roof panel 120 when that is overlying the trunk lid 124. However, in order properly to fulfill part of this objective to its best potential, it is necessary to keep to a minimum the gap between the leading edge 134 of that cover panel 130 and the backlight 180 and/or the means by which the roof panel 120 is connected to the pivot axis 122. In the present example, the roof panel 120 is connected to the pivot axis 122 by a pair of lateral swing arms 140, which are integral with the roof panel 120 itself.

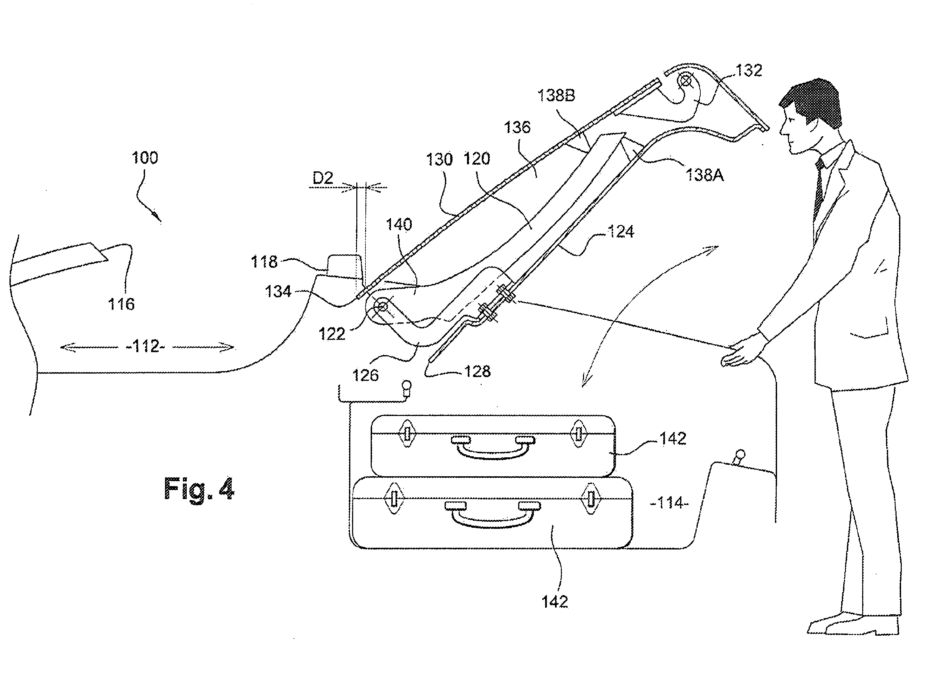

The trunk lid 124 can therefore be opened regardless of the position of the roof panel 120, even with the roof panel 120 overlying it, so that a user can store or remove baggage 142 (e.g. Figure 4).

In order properly to fulfill the objectives of the cover panel 130, however, it is necessary to keep to a minimum the gap D1 between the leading edge 134 of the closed cover panel 130 and the backlight 118. That is a technical requirement, born of both styling and technical considerations, the aim being to hide from view and protect to the maximum extent possible the roof panel and also the pivoting arrangement 122, 126, 140 located behind the backlight 118.

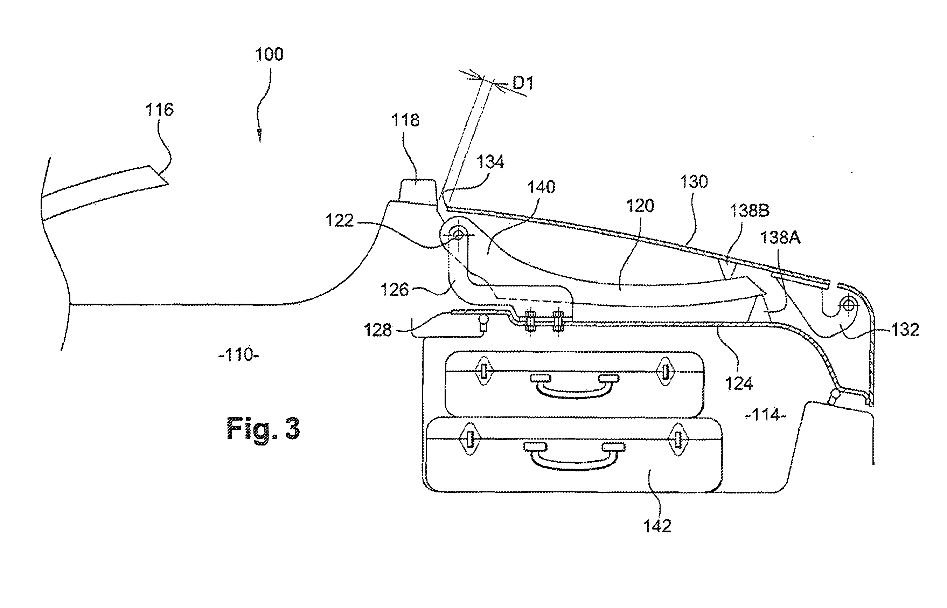

The addition of the cover panel 130 and the requirement to keep to a minimum the gap D1 to the backlight 118, may limit the angle to which the trunk lid 124 can be opened. The origin of this limitation can be seen with particular reference to Figure 4, in which it can be seen that the leading edge 134 of the cover panel 130 scribes an arc around the common pivot axis 122. If this were to be a feasible operation, it would bring the leading edge 134 of the cover panel 130 into interference with the back-light 118, the interference being represented by disappearance of the clearance gap D1 (visible in Figure 3) and the creation of an imaginary overlap D2 in the open position of the trunk lid 124 (visible in Figure 4).

Of course, an overlap D2 between the cover panel 130 and the backlight 118 cannot actually occur, because the backlight 118 is solid and it will block the pivoting upwards of the assembly comprising the trunk lid 124 and cover panel 130, regardless of whether the roof panel 120 is open or closed. It is therefore not actually possible to reach the desired opening angle illustrated in Figure 4, due to the blocking interference D2 between the leading edge 134 of the cover panel 130 and the backlight 118.

An objective of the present invention is to specifically overcome the limitation just discussed concerning the opening-angle of the trunk lid and cover panel assembly in our initial design, i.e. the design in the example illustrated with reference to Figures 1 to 4. To that end, the present invention proposes an improved version of our initial proposal (Figures 1 to 4) and a preferred embodiment of this improvement will now be discussed with particular reference to Figures 5 to 14.

In essence, the improvement consists of disassociating the roof panel axis and the trunk lid axis in such a manner as to be able to open the trunk lid to a useful angle whilst maintaining a clearance gap between the leading edge of the cover panel and the backlight, whether or not the roof panel is open. The clearance gap is preferably the minimum practical gap, given manufacturing and styling compromise, and may for example be a panel gap of say 6mm. This is reduced to practice not only in a technically satisfying manner, but also stylistically as will now be disclosed in greater detail.

Referring now in particular to Figures 5 to 13, a vehicle 10 is illustrated comprising a body shell 12 that defines a passenger compartment 14 and a trunk space 16 for the storage of goods/luggage 142.

The passenger compartment 14 extends rearwards from a front windshield 18 to an upstanding rigid element 20, which may be in the form of a roll bar and/or an upright rear backlight and may be permanently fixed in position. For the purposes of this non-limiting description, the upstanding rigid element shall indeed be consistently referred to for convenience as a backlight 20, made up from a rear window 22 surrounded by a roll bar/rigid frame 24.

The whole backlight assembly 20 of the present embodiment is permanently fixed in position, extending substantially vertically from a cross member 26 that traverses the rear of the passenger compartment 14. The rear cross member 26 may usefully incorporate channel means, configured for draining water and associated with a drain channel directing the rain water down and ultimately onto the road surface.

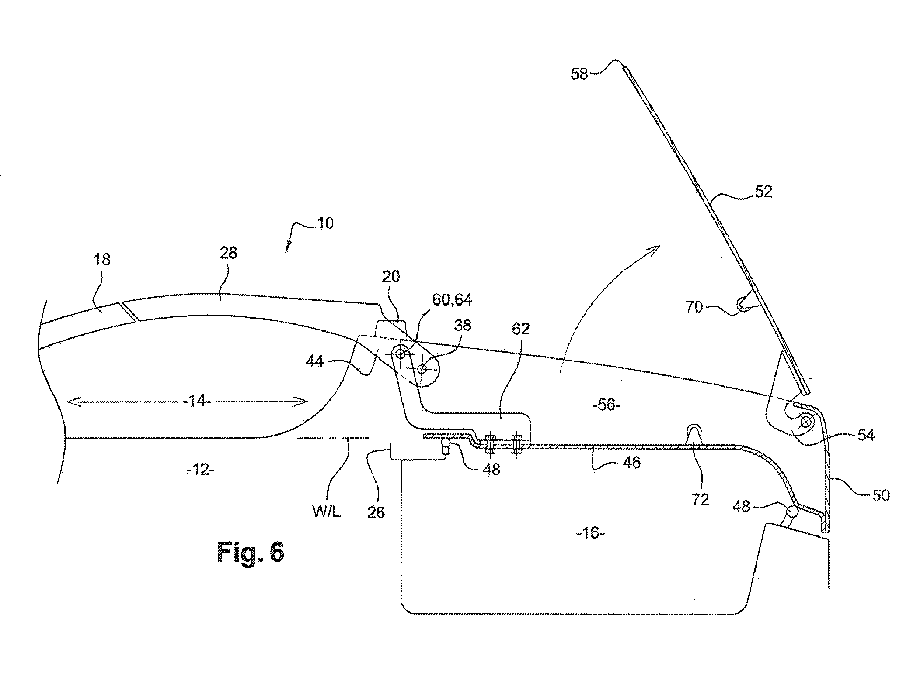

A rigid and one-piece roof panel 28 is provided which, when in its closed position, covers the passenger compartment 14. In the closed position (e.g. Figures 5 and 6) the roof panel 28 extends forwards from an upper contour or sealing ledge of the backlight 20 across the gap between the back light 20 and an upper-edge/header of the windshield 18.

A first sealing bead 30 is carried by the lower front edge of the roof panel 28 and interposed between it and an upper edge of the windshield 18. A second sealing bead 32 is carried by the roof panel and interposed between it and an upper sealing ledge 34 of the back light 20.

The roof panel 28 is mounted to the body shell 12 by a pair of pivot mountings 36, positioned one on each side of the cross member 26. The roof panel 28 can be pivoted out of its closed position covering the passenger compartment 14, back over itself 180° via a transversely orientated roof axis 38 and into an open position behind the backlight 20.

The pivot mountings 36 preferably each comprise a buttress 40 that is in the form of a freestanding pillar, rigidly fixed to the cross-member 26. The roof pivot axis 38 lies on a plane significantly above the waistline W/L of the vehicle 10, but also significantly below the roofline, for example about half way between the two of them.

The rear window 20 may be formed with a bulge outwards to accommodate the buttresses 40, in which case the buttresses 40 could act as mounting points for the like of seatbelts or other devices needing rigid anchorage. In the alternative, the buttresses 40 could be incorporated directly as part of the frame/roll-bar 24 surrounding the rear window 22.

Each buttress 40 supports a pivot axle 42, axially aligned with its counterpart on an opposing buttress 40 on the opposite side of the cross-member 26.

In a basic vehicle 10, the roof panel 28 could be manually pivotable about the roof axis 38. In a more sophisticated version, a motor means is provided for powered operation of the roof pivoting and may be embodied in the form of an endless chain, belt drive, driveshaft and bevel gears or similar, rising up the inside of one or both buttresses 40 from a motor drive unit below the pivot axis 40. In the preferred embodiment disclosed herein, the motor means comprises a single motor unit down below only one of the buttresses 40, with an endless chain running up the inside of the buttress 40 concerned on to a drive gear connected to the buttress pivot axle 42 in the pivot mounting assembly 36 of that side of the vehicle 10.

The roof panel 28 is operably connected to each buttress pivot axle 42 by at least one swinging arm 44, and preferably by a pair of them disposed one on each side of the roof panel 28. The swinging arms 44 are configured to pick up the roof panel 28 out of its closed position, i.e. to raise it substantially simultaneously out of contact with the windshield 18 and the backlight 20. This has the advantage of avoiding abrasive wear to the seals or other damage that is characteristic of systems in which a backlight swings over itself in unison with the roof panel.

The swing arms 44 continue to move about the roof pivot axis 38 and thereby swing the roof panel 28 substantially 180° over itself and to place it into its open position, in which it is upside-down and overlying a trunk-lid 46 that covers up the trunk space 16. As the swing arms 44 extend forward of the roof pivot axis 38 when the roof panel 28 is in its closed position and the roof pivot axis 38 is itself rather higher than the vehicle waistline W/L, it will be appreciated that, when the roof panel 28 is in its open position, it is below and rearwards of the roof pivot axis 38.

A trunk-lid 46 covers the trunk space 16 and it may rest on a sealing bead 48 that surrounds the access opening to the trunk space 16. The trunk-lid 46 further comprises a rear panel 50 that rises upwards from the rear edge of the trunk-lid 46 and which supports a cover panel 52 by hinge means, in the form of a swan-neck hinge 54. The trunk lid 46, rear panel 50 and cover panel 52 define a storage space 56 for the roof panel 28 when it is in its open position.

Unlike the trunk-space storage arrangements proposed by *Eyb* and latterly by *Chevtsov*, the storage space 56 of the present invention is outside of and separated from the trunk space 16, so it does not take away storage capacity. The cover panel 52 is an additional part that both protects the roof panel 28 from the elements and hides it from view. Hiding the roof panel 28 from view is not only aesthetically more pleasing than the open arrangements of *Pattee*, *Chevstov* and *Fioravanti*, but allows a design of roof panel seals 30, 32 that concentrates on functionality, thereby compensating somewhat the extra cost of the cover panel arrangement 52.

In similar fashion to the basic system disclosed in Figures 1 to 4, the cover panel 52 of the preferred embodiment can be opened by raising its leading edge 58 upwards to at least the height necessary to allow the roof panel 28 to pivot over into its open position overlying the trunk lid 46. The cover panel 52 can then be pivoted down to substantially cover-up the roof panel 28 from view. The kinematics of this sequence of events can be seen with particular reference to Figures 5 to 9.

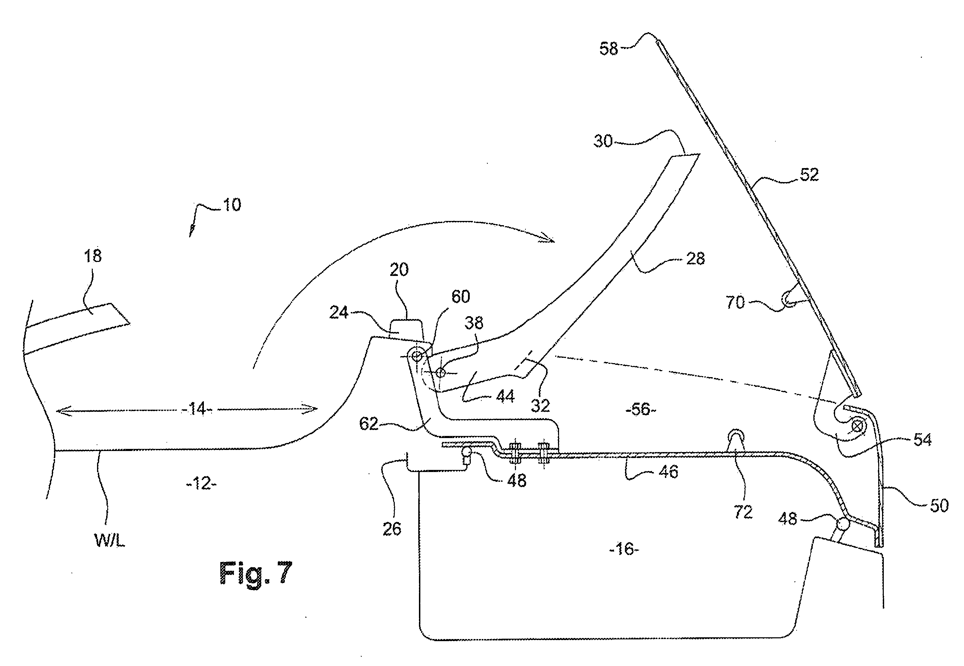

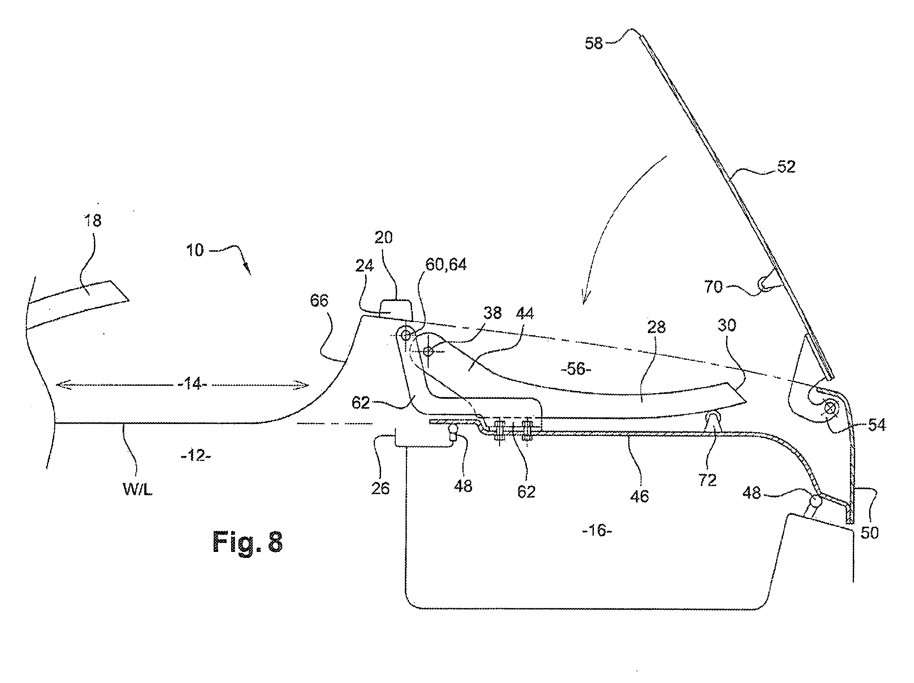

Starting in Figure 5, the roof panel 28 is in its closed position covering over the passenger compartment. In Figure 6, the cover panel 52 has been raised and in Figure 7 the roof panel 28 has been pivoted part way over itself. In Figure 8, the roof panel 28 has come to rest in its open position and the cover panel 52 is closing down over it. It will be appreciated that the operations illustrated in Figures 6 to 8 may performed with at least some overlap in the relative pivoting movements of the roof panel 28 and cover panel 52.

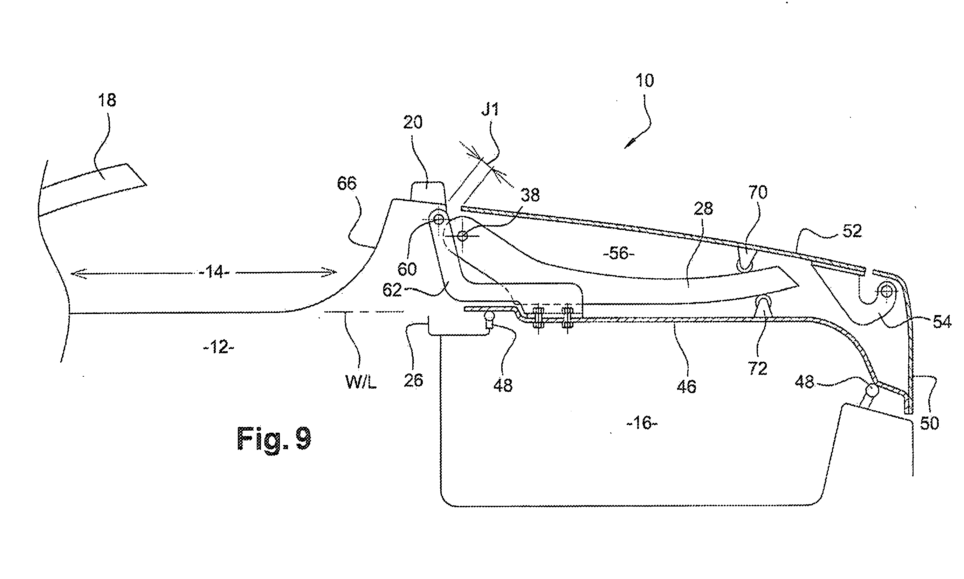

By the time the cover panel 52 has closed over the top of the open roof panel 28, the roof panel 28 is protected from the environment and from view and is neatly stowed inside the storage space 56. This is seen in side view with particular reference to Figure 9, where it can also be noted that the whole of the trunk space 16 is available for storage of luggage 142.

The pivot axis 38 of the roof panel 28 may be positioned substantially identically to the pivot axis 122 of the arrangement in Figures 1 to 4, which is to say significantly above the waistline W/L of the vehicle but below the level of the top of the backlight 20. As illustrated, the pivot axis 38 may therefore conveniently be positioned substantially half way between the plane of the trunk lid 46 and the plane in which sits the roof panel 28 when it is closed. In this manner, the pivoting of the swinging arms 44 between their limit-stops results in substantially 180° movement of the roof panel 28, bringing it to rest overlying the trunk lid 46.

In similar fashion to the original concept illustrated in Figures 1 to 4, the addition of the cover panel 52 in the preferred embodiment brings with it the requirement to keep to a minimum the gap from the leading edge 58 of the cover panel 52 to the rear face of the backlight 20.

With the roof panel 28 overlying the trunk lid 46 and the cover panel 52 closed, there is a small clearance gap J1 between the leading edge 58 of the cover panel 52 and the rear of the backlight 20. This clearance J1 is preferably kept as small as possible, say 6mm, not only for styling purposes but also to keep out the likes of water, dust and leaves. It will also be noted that the leading edge 58 extends forward over the top of the roof panel pivot axis 38, thereby largely protecting the pivoting arrangement 36 from view and the elements.

So as to avoid the problem of interference D2 described in relation to Figures 1 to 4, according to the present invention the pivot axis 60 of the trunk lid 46 is disassociated from the pivot axis 38 of the roof panel 28 and does not lie along it.

The trunk lid pivot axis 60 in the preferred embodiment is located transversely across the vehicle body 12 on a plane that is above and forwards of the plane of the roof panel pivot axis 38. That means that the trunk lid pivot axis 60 is preferably more than half way up between the waistline W/L and the plane of the closed roof panel 28 or upper surface of the backlight 20.

The trunk lid 46 is connected to its pivot axis 60 by a pair of trunk lid hinges 62, in the form of metal plate stampings substantially in "L" shape that are fixed to the trunk lid 46 along the foot of the "L" and to a trunk lid pivot axle 64 at the upper point of the "L".

The trunk lid pivot axis 60 and therefore also the trunk lid pivot axle 64 are not only geometrically disassociated from the roof panel pivot axis 38. Indeed, the trunk lid pivot axle 64 is physically disassociated from all of the roof panel pivot mounting arrangement 36. The side paneling 66 of the body shell 12 rises up in a ramp from the rear of the vehicle 10 to well above the waistline W/L, so as to form the sides of the storage space 56 and to cover the roof panel pivot mountings 36 from side view. A trunk lid pivot axle 64 is mounted on the inward facing side of the ramped-up body shell sides 66, one on each side of the body shell 12 above and forward of the roof pivot axis 38.

The disassociation of the roof axis 38 from the trunk lid axis 60 is therefore reduced to practice in such a manner that, during opening of the trunk lid 46 with the cover panel 52 in its closed position, the leading edge 58 of the cover panel 52 follows a path that maintains substantially the same clearance gap J1 in both open and closed positions of the trunk lid 46. This is the case regardless of whether the roof panel 28 is closed over the passenger compartment 14 or open and overlying the truck lid 46 underneath the cover panel 52.

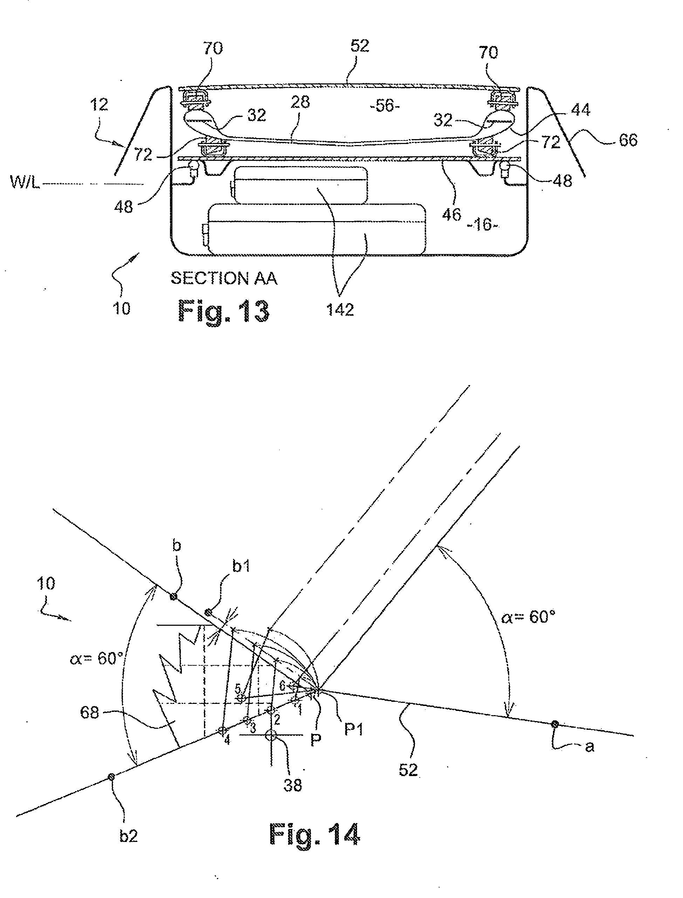

The relationship that defines the clearance gap J1 is the one between the backlight 20 and the arc scribed by the leading edge 58 of the cover panel as it pivots around the trunk lid axis 60 between the open and closed positions of the truck lid 46. This can be derived by way of one example from Figure 14.

Referring now in particular to Figure 14, one graphical example of possible disassociation between the trunk lid axis 60 and the roof axis 38 is illustrated. To that end, Figure 14 shows in side-view how an area 68 can be constructed such that placing the trunk lid pivot axis 60 in that area will avoid the interference D2 suffered by the arrangement of Figure 4. Construction of the safe area 68 overcomes the initial problem of guaranteeing a clearance gap between the leading edge 58 of the cover panel 52 and the backlight 20 and that at least ensures that the trunk lid 46 can be opened fully.

Advantageously, the same geometry illustrates how an optimum position can be found so as to provide substantially the same gap between the leading edge 58 of the cover panel 52 and the backlight 20 for both fully open and fully closed positions of the trunk lid 46.

In Figure 14, the trunk lid pivot axis 60 is represented by the point ***"P"***, the cover panel 52 by ***"a"*** and the leading edge 58 of the cover panel by the point ***"P1"***. The line ***"b"*** represents the datum against which the clearance gap ***"J1"*** must be maintained (i.e. the shape of the backlight 20). The line ***"b1"*** represents the limit to which the leading edge ***"P1"*** of the cover panel ***"a"*** is allowed reach with respect to the datum ***"b"***, so as to maintain the consistent gap ***"J1"*** at the ends of pivotal travel of the trunk lid 46.

For a cover panel ***"a"*** having an opening angle of ***"a"*** (e.g. 60°), the same angle ***"a"*** is transposed over to the left hand side where ***"a"*** is dropped down from the line ***"b"***, so as to generate the line ***"b2"*** about ***"P"***. As the cover panel ***"a"*** is pivoted around ***"a"***, its leading edge ***"P1"*** scribes and arc around ***"P"*** and finishes up on the line ***"b1"***. The distance up ***"b1"*** that the point ***"P1"*** will finish with the same clearance J1, depends of how far down the line ***"b2"*** the axis ***"P"*** is positioned.

The distance between ***"P"*** and ***"P1"*** represents the distance between the cover panel leading edge 58 and the trunk lid pivot axis 60. A series of possible locations (***"1"*** to ***"4"***) is illustrated for ***"P"***, running down the line ***"b2"*** away from a single position of ***"P1"***. The locations (***"1"*** to ***"4"***) illustrate an increasing length of radius and therefore of arc scribed by ***"P1"*** about ***"P"***, which translates into ***"P1"*** climbing proportionately further up ***"b1"***, by way of providing the substantially constant clearance gap ***"J1"*** in both open and closed positions of the trunk lid 46.

A point ***"5"*** has been added above the line ***"b2"*** and it can be seen that the arc scribed about ***"5"*** will indeed ensure that there is a clearance gap in the open position of the trunk lid 46. It will be noted, however, that in this case ***"P1"*** will not end up on ***"b1"*** and therefore the gap between ***"P1"*** and ***"b"*** in the open position of the trunk lid 46 will not be the optimum ***"J1"*** (i.e. about 6mm). The gap ***"P1"*** to ***"b*** using the location ***"5"*** will be rather greater than the preferred constant gap ***"J1"*** (i.e. about 6mm according to the preferred line ***"b1"***), so it will not look so good to a user although it will provide the technical effect sought after to resolve the problem identified with particular reference to Figure 4.

By simulation, experiment and prototyping, an area 68 can be developed in the diagram in which a designer knows he can position the trunk lid pivot axis ***"P"*** with respect to the backlight 20 and/or roof pivot axis 38 without risking interference D2. He will also have the information necessary to develop the ideal line ***"b2"*** along which to position ***"P"***, i.e. so as to ensure a consistent clearance gap J1 between open and closed positions of the trunk lid 46.

It will be noted that the clearance gap J1 is consistent (e.g. 6mm) in each of the open and closed positions of the trunk lid 46 but, as the leading edge 58 of the cover panel 52 scribes an arc whilst opening, the gap will first increase and then decrease along the arc. It is considered most important aesthetically that a user sees a constant gap J1 at the opposite ends of the travel and that they are unlikely to be unduly distracted by the variation in the gap that takes place during trunk lid opening.

It will be appreciated that, while the diagram illustrated was used by the applicant to select the position for his disassociated trunk lid axis, it applied to the applicant's specific arrangement of backlight 20 and pivoting arrangement. It is considered to be within the scope of the present invention for the skilled designer to develop other diagrams in similar fashion for arrangements having different shapes of hardware (20, 28, 36, 40, 44, 46, 52, 58, 66).

In the preferred embodiment, the trunk lid pivot axis 60 has been position above the waistline W/L of the vehicle and forward of the roof panel pivot axis 38. The position of the trunk lid pivot axis 60 is, furthermore, in front of roof panel pivot axis 38. The position chosen for the preferred embodiment is therefore at or close to the point ***"P"***; ***"3"*** on ***"b2"***. It will however be appreciated that other positions are possible, in dependence on the safe area 68 developed in a diagram that is equivalent to Figure 5 and that applies to another embodiment of the present invention.

It will be noted in the Figures 1 to 4 and indeed in *Chevtsov* and after him *Fioravanti*, that use of a common axis between the trunk lid and the roof panel means that the two panels pivot up simultaneously and there is no relative movement between them.

In adding the cover panel 130 in the embodiment illustrated in Figures 1 to 4, the lack of relative movement meant that the support means 138A,B could for example be simple rubber blocks.

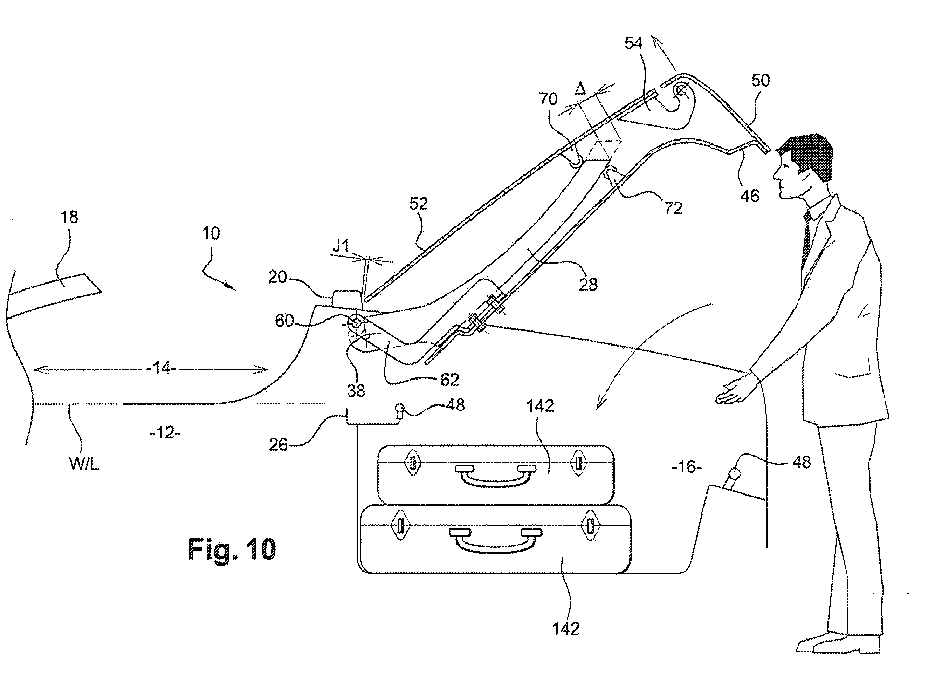

In the arrangement of the preferred embodiment discussed with respect to Figures 5 to 14, it will be noted that the disassociation of trunk lid pivot axis 60 from roof panel pivot axis 38 causes relative movement "Δ" during opening between the trunk lid 46 and cover panel 52 combination and the opened roof panel 28. This can best be observed with particular reference to Figure 10, in which the distance "Δ" of relative movement depends on how far from each other the roof pivot axis 38 and the trunk pivot axis 60 are separated.

It would be possible to design an embodiment in which the roof panel 28 did not actually contact either the trunk-lid 46 or the cover panel 52, e.g. using stops in the rotary mechanism. However, for economic and reliable manufacture, the roof panel 28 in the preferred embodiment is held in position between the trunk lid 46 and the cover panel 50 by support means rising from the former and depending from the latter.

Due to the relative movement "Δ" that results during opening (Figure 10), it is preferable to use support means that avoid the abrasion that might otherwise occur if rubbing were to be allowed between the open roof panel 28 and either or both of the trunk lid 46 and cover panel 52. To that end, during opening of the trunk lid 46 with the roof panel 28 open and in the storage space 56, the support means of the preferred embodiment guide relative movement in such a way as to minimize or preferably avoid abrasion of the roof panel 28.

One possible embodiment of guiding means might be at least one block that is configured to allow the roof panel 28 to slide along it during opening. In the preferred embodiment, however, the guiding means are reduced to practice as rotary members, more particularly in the form of roller or caster wheels, advantageously made in a resilient or vibration absorbing material such as rubber.

There is preferably a wheel 70 depending from each side of the cover panel 52 and a corresponding wheel 72 rising from the trunk lid 46. Due to the lengthways dished/curved nature of the illustrated roof panel 28, the wheels 70 on the cover panel 52 are preferably positioned forward of the wheels 72 on the trunk lid 46.

Due to the sideways dished/curved nature of the illustrated roof panel 28, the wheels 70, 72 on one or both of the cover panel 52 and trunk lid 46 are preferably adapted to the shape of the portion of the roof panel along which they turn. This can be seen by way of example with particular reference to Figure 13, in which the wheel 72 rising from the trunk lid 46 are frustro-conical and facing inwards.

A convertible vehicle 10 is therefore disclosed, which has a rigid roof panel 28 configured to pivot 180° over itself into an open position in which it overlies a trunk lid 46. The trunk lid 46 supports a rear-hinged cover panel 52 that is configured to close down over the open roof panel 28 to hide it from view. The pivot axis 60 of the trunk lid 46 is disassociated from the pivot axis 38 of the roof panel 28, such that the trunk lid 46 can be pivoted about its axis whilst ensuring that the leading edge 58 of the cover panel 52 will not hit the rear backlight 20 of the passenger compartment 14 when the trunk space 16 is accessed.

## Claims

1. A vehicle comprising a body shell (12) defining a passenger compartment (14) extending between a windscreen (18) at its front and at its rear an upstanding rigid element (20), said body shell further defining a trunk space (16) extending rearwards of said passenger compartment, said trunk space being provided with a trunk lid (46) that is pivotally mounted near its forward edge to said body shell via a transverse trunk lid axis (60) and configured for closure over the top of said trunk space, the vehicle (10) further comprising a rigid roof panel (28), said rigid roof panel being pivotally mounted to said body shell along a transverse roof axis (38) extending across said body shell above a waistline (W/L) of said vehicle in the region of said upstanding rigid element, said rigid roof panel being pivotable between a closed position in which said rigid roof panel extends from said upstanding rigid element towards said windscreen and at least partially covers said passenger compartment, and an open position in which said rigid roof panel is substantially up-side down and overlies said trunk lid, **characterized in that** said trunk lid (46) supports an openable cover panel (52) that is configured to substantially cover said rigid roof panel (28) when said rigid roof panel is in its open position, said cover panel having a transverse leading edge (58) that extends at least partially across a rear facing portion of said upstanding rigid element (20), and **in that** said roof axis (38) and said trunk axis (60) are non-coaxial and are spaced apart from each other in such a manner that, during opening of said trunk lid (46) with said cover panel (52) in its closed position, said leading edge (58) of said cover panel is configured to follow a path that provides, in both an open and a closed position of said trunk lid, a clearance gap (J1), and preferably substantially the same clearance gap, between said leading edge of said cover panel and at least one of said upstanding rigid element (20) and the pivotal mounting (36) of said roof panel, regardless of whether said rigid roof panel is in its closed position or in its open position.

2. A vehicle according to claim 1, wherein said trunk axis (60) is positioned above the waistline (W/L) of said vehicle (10) and forwards of said roof axis (38).

3. A vehicle according to claim 1 or claim 2, wherein said trunk axis (60) is positioned higher up than said roof axis (38).

4. A vehicle according to any preceding claim, wherein means (70) are provided for guiding relative movement between on the one hand the assembly of said trunk lid and said cover panel and on the other hand said roof panel, said guide means being operational during opening or closing of said trunk lid whilst said rigid roof panel is in its open position and overlyingsaid trunk lid, and said guide means being configured to avoid abrasion between said roof panel and said assembly of trunk lid and cover panel during the relative movement that results from the independent positioning of said roof panel axis and said trunk lid axis.

5. A vehicle according to claim 4, wherein said guide means comprise at least one sliding block or rotary member (72, 70) supported by said trunk lid (46) or said cover panel (52).

6. A vehicle according to claim 4 or claim 5, wherein said guide means comprises one or more rollers or wheels (70, 72).

7. A vehicle according to any one of claims 4 to 6, wherein said guide means comprises at least one pair of rotary members (70, 72) that sandwiches said roof panel (28) between the upper surface of said trunk lid (46) and the underside of said cover panel (52), there being preferably provided at least one such pair of guide means on each side of said assembly of trunk lid and cover panel.

8. A vehicle according to claim 7, wherein said rigid roof panel(28) is concave in longitudinal cross section when overlying said trunk lid (46), and said trunk lid mounted guide means (72) are aft of said cover panel mounted guide means (70).

9. A vehicle according to claim 7 or claim 8, wherein said rigid roof panel (28) is concave in lateral cross section when overlying said trunk lid (46) and said trunk lid guide means (72) are positioned inboard of said cover panel guide means (70), said guide means (70, 72) preferably comprising a pair of rollers supported one on each side of said trunk lid and presenting an inwardly and downwardly directed roller surface to said roof panel, for example by means of frusto-conical or curved roller surfaces.

10. A vehicle according to any one of claims 4 to 9, wherein one or more of said guide means (70, 72) are resilient, so as to act for example as vibration absorbers.

11. A vehicle according to any preceding claim, wherein said rigid roof panel (28) is pivotally mounted on a buttress member (40) that is structurally independent of, and spaced inboard of, the lateral bodywork panels (66) of said body shell (12).

12. A vehicle according to any preceding claim, wherein said rigid roof panel (28) is connected to its roof axis (60) via at least one swing arm (44), and preferably one on each side thereof, the or each swing arm (44) being configured to lift said rigid roof panel (28) upwards out of contact with an upper edge of said windscreen (18) and an upper edge of said upstanding rigid element (20) and, on pivoting rearwards substantially 180°, to turn said rigid roof panel up-side down and to position it overlying said trunk lid (46) rearwards of said upstanding rigid element.

13. A vehicle according to any preceding claim, wherein said trunk lid (46) is pivotally mounted (64) to lateral bodywork (66) of said body shell (12).

14. A vehicle according to any preceding claim wherein, wherein said cover panel (52) is hinged (54) to a rear edge (50) of said trunk lid (46) and preferably extends forwards at least partially over the pivotal mounting (36, 64) of either or both of said roof panel (28) and said trunk lid (46).

15. A vehicle according to any preceding claim, wherein drainage means (26) are provided across said body shell (12) substantially under the leading edge (58) of said cover panel (52).

16. A vehicle according to any preceding claim, wherein said upstanding rigid element (20) at the rear side of said passenger compartment (14) comprises a rear back light, a roll bar assembly or a combination of the two, preferably permanently fixed in position.

## Patentansprüche

1. Fahrzeug mit einem Rohbau (12), der einen Fahrzeuginnenraum (14) definiert, der sich zwischen einer Windschutzscheibe (18) an seiner Vorderseite und einem aufrechten starren Element (20) an seiner Rückseite erstreckt, wobei der Rohbau ferner einen Kofferraum (16) definiert, der sich hinter dem Fahrzeuginnenraum erstreckt und mit einem Kofferraumdeckel (46) versehen ist, der in der Nähe seines vorderen Rands über eine quer verlaufende Kofferraumdeckelachse (60) schwenkbar am Rohbau montiert und zum Schließen über der Oberseite des Kofferraums konfiguriert ist, wobei das Fahrzeug (10) ferner ein starres Dachblech (28) umfasst, das entlang einer quer verlaufenden Dachachse (38), die sich über einer Gürtellinie (W/L) des Fahrzeugs im Bereich des aufrechten starren Elements über den Rohbau erstreckt, schwenkbar am Rohbau montiert ist, wobei das starre Dachblech zwischen einer geschlossenen Position, in der sich das starre Dachblech vom aufrechten starren Element zur Windschutzscheibe erstreckt und mindestens teilweise den Fahrzeuginnenraum abdeckt, und einer offenen Position schwenkbar ist, in der das starre Dachblech im Wesentlichen umgekehrt ist und über dem Kofferraumdeckel liegt, **dadurch gekennzeichnet, dass** der Kofferraumdeckel (46) eine Abdeckplatte (52) stützt, die geöffnet werden kann und so konfiguriert ist, dass sie das starre Dachblech (28) im Wesentlichen abdeckt, wenn das starre Dachblech in seiner offenen Position ist, wobei die Abdeckplatte einen quer verlaufenden vorderen Rand (58) hat, der sich mindestens teilweise über einen nach hinten weisenden Abschnitt des aufrechten starren Elements (20) erstreckt, und dass die Dachachse (38) und die Kofferraumachse (60) nicht koaxial sind und so voneinander beabstandet sind, dass der vordere Rand (58) der Abdeckplatte so konfiguriert ist, dass er beim Öffnen des Kofferraumdeckels (46) mit der Abdeckplatte (52) in ihrer geschlossenen Position einer Bahn folgt, die sowohl in einer offenen als auch einer geschlossenen Position des Kofferraumdeckels für einen Abstandsspalt (J1), und vorzugsweise im Wesentlichen denselben Abstandsspalt, zwischen dem vorderen Rand der Abdeckplatte und dem aufrechten starren Element (20) und/oder der Schwenkhalterung (36) des Dachblechs sorgt, unabhängig davon, ob das starre Dachblech in seiner geschlossenen Position oder in seiner offenen Position ist.

2. Fahrzeug nach Anspruch 1, wobei die Kofferraumachse (60) oberhalb der Gürtellinie (W/L) des Fahrzeugs (10) und vor der Dachachse (38) positioniert ist.

3. Fahrzeug nach Anspruch 1 oder 2, wobei die Kofferraumachse (60) höher als die Dachachse (38) positioniert ist.

4. Fahrzeug nach einem der vorhergehenden Ansprüche, wobei Mittel (70) zum Führen der Relativbewegung zwischen einerseits der Anordnung aus Kofferraumdeckel und Abdeckplatte und andererseits dem Dachblech vorgesehen sind, wobei die Führungsmittel während des Öffnens oder Schließens des Kofferraumdeckels in Betrieb sind, während das starre Dachblech in seiner offenen Position ist und über dem Kofferraumdeckel liegt, und wobei die Führungsmittel so konfiguriert sind, dass während der Relativbewegung, die sich aus der unabhängigen Positionierung der Dachblechachse und der Kofferraumdeckelachse ergibt, ein Abrieb zwischen dem Dachblech und der Anordnung aus Kofferraumdeckel und Abdeckplatte vermieden wird.

5. Fahrzeug nach Anspruch 4, wobei die Führungsmittel mindestens einen Gleitblock oder ein Drehelement (72, 70) umfassen, der bzw. das vom Kofferraumdeckel (46) oder der Abdeckplatte (52) gestützt wird.

6. Fahrzeug nach Anspruch 4 oder 5, wobei das Führungsmittel eine oder mehrere Rollen oder ein oder mehrere Räder (70, 72) umfasst.

7. Fahrzeug nach einem der Ansprüche 4 bis 6, wobei das Führungsmittel mindestens ein Paar Drehelemente (70, 72) umfasst, das das Dachblech (28) zwischen der oberen Fläche des Kofferraumdeckels (46) und der Unterseite der Abdeckplatte (52) einlegt, wobei mindestens ein derartiges Paar Führungsmittel auf jeder Seite der Anordnung aus Kofferraumdeckel und Abdeckplatte vorgesehen ist.

8. Fahrzeug nach Anspruch 7, wobei das starre Dachblech (28) im Längsquerschnitt konkav ist, wenn es über dem Kofferraumdeckel (46) liegt, und die am Kofferraumdeckel montierten Führungsmittel (72) hinter den an der Abdeckplatte montierten Führungsmitteln (70) liegen.

9. Fahrzeug nach Anspruch 7 oder 8, wobei das starre Dachblech (28) im seitlichen Querschnitt konkav ist, wenn es über dem Kofferraumdeckel (46) liegt, und die Kofferraumführungsmittel (72) binnenbords der Abdeckplattenführungsmittel (70) positioniert sind, wobei die Führungsmittel (70, 72) vorzugsweise ein Paar Rollen umfassen, die an jeder Seite des Kofferraumdeckels gestützt sind und dem Dachblech eine nach innen und unten gerichtete Rollenfläche bieten, beispielsweise mittels kegelstumpfförmiger oder gebogener Rollenflächen.

10. Fahrzeug nach einem der Ansprüche 4 bis 9, wobei eines oder mehrere der Führungsmittel (70, 72) elastisch ist/sind, um beispielsweise als Schwingungsdämpfer zu wirken.

11. Fahrzeug nach einem der vorhergehenden Ansprüche, wobei das starre Dachblech (28) schwenkbar an einem Strebenelement (40) montiert ist, das von den seitlichen Karosseriebeplankungen (66) des Rohbaus (12) strukturell unabhängig ist und binnenbords davon beabstandet ist.

12. Fahrzeug nach einem der vorhergehenden Ansprüche, wobei das starre Dachblech (28) über mindestens einen Schwingarm (44), und vorzugsweise einen an jeder Seite davon, mit seiner Dachachse (60) verbunden ist, wobei der oder jeder Schwingarm (44) so konfiguriert ist, dass er das starre Dachblech (28) nach oben außer Kontakt mit einem oberen Rand der Windschutzscheibe (18) und einem oberen Rand des aufrechten starren Elements (20) hebt und das starre Dachblech beim nach hinten Schwenken um im Wesentlichen 180° umkehrt und es so positioniert, dass es über dem Kofferraumdeckel (46) hinter dem aufrechten starren Element liegt.

13. Fahrzeug nach einem der vorhergehenden Ansprüche, wobei der Kofferraumdeckel (46) schwenkbar an der seitlichen Karosserie (66) des Rohbaus (12) montiert ist.

14. Fahrzeug nach einem der vorhergehenden Ansprüche, wobei die Abdeckplatte (52) an einem hinteren Rand (50) des Kofferraumdeckels (46) angelenkt (54) ist und sich vorzugsweise mindestens teilweise über die Schwenkhalterung (36, 64) des Dachblechs (28) oder des Kofferraumdeckels (46) oder beider nach vorne erstreckt.

15. Fahrzeug nach einem der vorhergehenden Ansprüche, wobei Ablaufmittel (26) über den Rohbau (12) im Wesentlichen unter dem vorderen Rand (58) der Abdeckplatte (52) vorgesehen sind.

16. Fahrzeug nach einem der vorhergehenden Ansprüche, wobei das aufrechte starre Element (20) an der Rückseite des Fahrzeuginnenraums (14) ein Rücklicht, eine Überrollbügelanordnung oder eine Kombination daraus, vorzugsweise dauerhaft an Ort und Stelle befestigt, umfasst.

## Revendications

1. Véhicule comprenant une coque de caisse (12) définissant un compartiment passager (14) s'étendant entre un pare-brise (18) à l'avant et un élément rigide dressé (20) à l'arrière, ladite coque de caisse définissant en outre un espace de coffre (16) s'étendant vers l'arrière dudit compartiment passager, ledit espace de coffre étant muni d'un capot de coffre (46) qui est monté à pivotement à proximité de son bord avant sur ladite coque de caisse par le biais d'un axe transversal (60) de capot de coffre et qui est configuré de manière à se fermer par-dessus ledit espace de coffre, le véhicule (10) comprenant en outre un panneau de toit rigide (28), ledit panneau de toit rigide étant monté de manière pivotante sur ladite coque de caisse le long d'un axe transversal de toit (38) s'étendant en travers de ladite coque de caisse au-dessus d'une ligne de ceinture (W/L) dudit véhicule dans la région dudit élément rigide dressé, ledit panneau de toit rigide pouvant pivoter entre une position fermée dans laquelle ledit panneau de toit rigide s'étend depuis ledit élément rigide dressé vers ledit pare-brise et couvre au moins partiellement ledit compartiment passager, et une position ouverte dans laquelle ledit panneau de toit rigide est substantiellement renversé et recouvre ledit capot de coffre, **caractérisé en ce que** ledit capot de coffre (46) supporte un panneau de recouvrement ouvrable (52) qui est configuré pour couvrir substantiellement ledit panneau de toit rigide (28) lorsque ledit panneau de toit rigide est dans sa position ouverte, ledit panneau de recouvrement ayant un bord avant transversal (58) qui s'étend au moins en partie en travers d'une portion tournée vers l'arrière dudit élément rigide dressé (20), et **en ce que** ledit axe de toit (38) et ledit axe de coffre (60) ne sont pas coaxiaux et sont espacés l'un de l'autre de manière telle que, lors de l'ouverture dudit capot de coffre (46) avec ledit panneau de recouvrement (52) dans sa position fermée, ledit bord avant (58) dudit panneau de recouvrement soit configuré de manière à suivre un chemin qui fournit, à la fois dans une position ouverte et dans une position fermée dudit capot de coffre, un espace de dégagement (J1), et de préférence substantiellement le même espace de dégagement, entre ledit bord avant dudit panneau de recouvrement et au moins l'un dudit élément rigide dressé (20) et du montage pivotant (36) dudit panneau de toit, indépendamment du fait que ledit panneau de toit rigide est dans sa position fermée ou dans sa position ouverte.

2. Véhicule selon la revendication 1, dans lequel ledit axe de coffre (60) est positionné au-dessus de la ligne de ceinture (W/L) dudit véhicule (10) et en avant dudit axe de toit (38).

3. Véhicule selon la revendication 1 ou la revendication 2, dans lequel ledit axe de coffre (60) est positionné plus haut que ledit axe de toit (38).

4. Véhicule selon l'une quelconque des revendications précédentes, dans lequel des moyens (70) sont prévus pour, guider le mouvement relatif entre, d'une part, l'ensemble dudit capot de coffre et dudit panneau de recouvrement et d'autre part, ledit panneau de toit, lesdits moyens de guidage étant utilisés au cours de l'ouverture ou de la fermeture dudit capot de coffre tandis que ledit panneau de toit rigide est dans sa position ouverte recouvrant ledit capot de coffre, et lesdits moyens de guidage étant configurés pour éviter l'abrasion entre ledit panneau de toit et ledit ensemble dudit capot de coffre et dudit panneau de recouvrement au cours du mouvement relatif résultant du positionnement indépendant dudit axe de panneau de toit et dudit axe de capot de coffre.

5. Véhicule selon la revendication 4, dans lequel lesdits moyens de guidage comprennent au moins un bloc coulissant ou organe rotatif (72, 70) supporté par ledit capot de coffre (46) ou ledit panneau de recouvrement (52).

6. Véhicule selon la revendication 4 ou 5, dans lequel lesdits moyens de guidage comprennent un ou plusieurs galets ou roues (70, 72).

7. Véhicule selon l'une quelconque des revendications 4 à 6, dans lequel lesdits moyens de guidage comprennent au moins une paire d'organes rotatifs (70, 72) qui prennent en sandwich ledit panneau de toit (28) entre la surface supérieure dudit capot de coffre (46) et le côté inférieur dudit panneau de recouvrement (52), au moins une telle paire de moyens de guidage étant de préférence prévue de chaque côté dudit ensemble dudit capot de coffre et dudit panneau de recouvrement.

8. Véhicule selon la revendication 7, dans lequel ledit panneau de toit rigide (28) est concave en section transversale longitudinale, lorsqu'il recouvre ledit capot de coffre (46), et lesdits moyens de guidage (72) montés sur le capot de coffre sont en arrière desdits moyens de guidage (70) montés sur le panneau de recouvrement.

9. Véhicule selon la revendication 7 ou la revendication 8, dans lequel ledit panneau de toit rigide (28) est concave en section transversale latérale lorsqu'il recouvre ledit capot de coffre (46) et lesdits moyens de guidage (72) de capot de coffre sont positionnés à l'intérieur desdits moyens de guidage (70) de panneau de recouvrement, lesdits moyens de guidage (70, 72) comprenant de préférence une paire de galets supportés respectivement de chaque côté dudit capot de coffre et présentant une surface de galet orientée vers l'intérieur et vers le bas sur ledit panneau de toit, par exemple au moyen de surfaces de galet tronconiques ou courbes.

10. Véhicule selon l'une quelconque des revendications 4 à 9, dans lequel un ou plusieurs desdits moyens de guidage (70, 72) sont élastiques, de manière à agir par exemple en tant qu'absorbeurs de vibrations.

11. Véhicule selon l'une quelconque des revendications précédentes, dans lequel ledit panneau de toit rigide (28) est monté de manière pivotante sur un organe de contrefort (40) qui est structurellement indépendant et espacé vers l'intérieur des panneaux de tôle latéraux (66) de ladite coque de caisse (12).

12. Véhicule selon l'une quelconque des revendications précédentes, dans lequel ledit panneau de toit rigide (28) est connecté à son axe de toit (60) par le biais d'au moins un bras oscillant (44), et de préférence un de chaque côté de celui-ci, le ou chaque bras oscillant (44) étant configuré de manière à soulever ledit panneau de toit rigide (28) vers le haut hors de contact d'un bord supérieur dudit pare-brise (18) et d'un bord supérieur dudit élément rigide dressé (20), et, par un pivotement vers l'arrière de substantiellement 180°, à retourner ledit panneau de toit rigide et le positionner par-dessus ledit capot de coffre (46) à l'arrière dudit élément rigide dressé.

13. Véhicule selon l'une quelconque des revendications précédentes, dans lequel ledit capot de coffre (46) est monté de manière pivotante (64) sur une tôle latérale (66) de ladite coque de caisse (12).

14. Véhicule selon l'une quelconque des revendications précédentes, dans lequel ledit panneau de recouvrement (52) est articulé (54) à un bord arrière (50) dudit capot de coffre (46) et s'étend de préférence vers l'avant au moins en partie par-dessus le montage pivotant (36, 64) dudit panneau de toit (28) et/ou dudit capot de coffre (46).

15. Véhicule selon l'une quelconque des revendications précédentes, dans lequel des moyens de drainage (26) sont prévus en travers de ladite coque de caisse (12) substantiellement sous le bord avant (58) dudit panneau de recouvrement (52).

16. Véhicule selon l'une quelconque des revendications précédentes, dans lequel ledit élément rigide dressé (20) au niveau du côté arrière dudit compartiment passager (14) comprend un feu arrière, un ensemble de barre antiroulis ou une combinaison des deux, de préférence fixés en position de manière permanente.
